# EUROPEAN PATENT APPLICATION

(11) **EP 1 132 835 A1**
(43) Date of publication of application: **12.09.2001**
(21) Application number: 01302138.1
(22) Date of filing: 08.03.2001
(51) Int. Cl.: G06F 17/30, H04N 5/14, G06T 7/20

(54) **Method of generating synthetic key frame and video browsing system using the same**

(30) Priority: 08.03.2000 KR 2000011565
(71) Applicant: LG ELECTRONICS INC., Seoul (KR)
(72) Inventor: Jun, Sung Bae, Seoul (KR); Yoon, Kyoung Ro, Seoul (KR); Cheong, Chan Eui, Yongin, Kyunggi-Do (KR)
(74) Representative: McLeish, Nicholas Alistair Maxwell

(57) **Abstract**

There are provided a method of generating a synthetic key frame, capable of displaying lots of information on limited device, and a video browsing system using the synthetic key frame. The method of generating a synthetic key frame includes tne steps of receiving a video stream from a first source and dividing it into meaningful sections, selecting key frame(s) or key region(s) representative of a divided section, and combining the selected key frame(s) or key region(s) to generate one synthetic key frame.

## Description

### BACKGROUND OF THE INVENTION

### 1 Field of the Invention

The present invention relates to a content-based multimedia searching system and, more particularly, to a synthetic key frame generating method capable of displaying lots of information on a screen with a fixed size and a video browsing system using thereof.

### 2 Description of the Related Art

With the development of image/video processing technologies in recent years, users can search/filter and browse a desired part of a desired video contents (or moving picture, for example, movie, drama, documentary program, etc.) at a desired time.

A basic technique for non-linear video browsing or searching includes shot segmentation and shot clustering. These techniques are used for analyzing and searching or browsing multimedia contents.

In the image/video processing technologies, a shot is a sequence of video frames obtained by one camera without interruption, which is a basic unit for constructing and analyzing a video. A scene is a constituent element meaningful in the video, that is, significant element in the development of story One scene includes a number of shots.

Meanwhile, a video indexing system structurally analyses video contents and detects shots and scenes using a shot segmentation engine and a shot clustering engine. The video indexing system also extracts key frames or key regions capable of representing a segment based on the detected shots and scenes, and provides a tool for summarizing the video stream or directly moving to a desired position in the video stream.

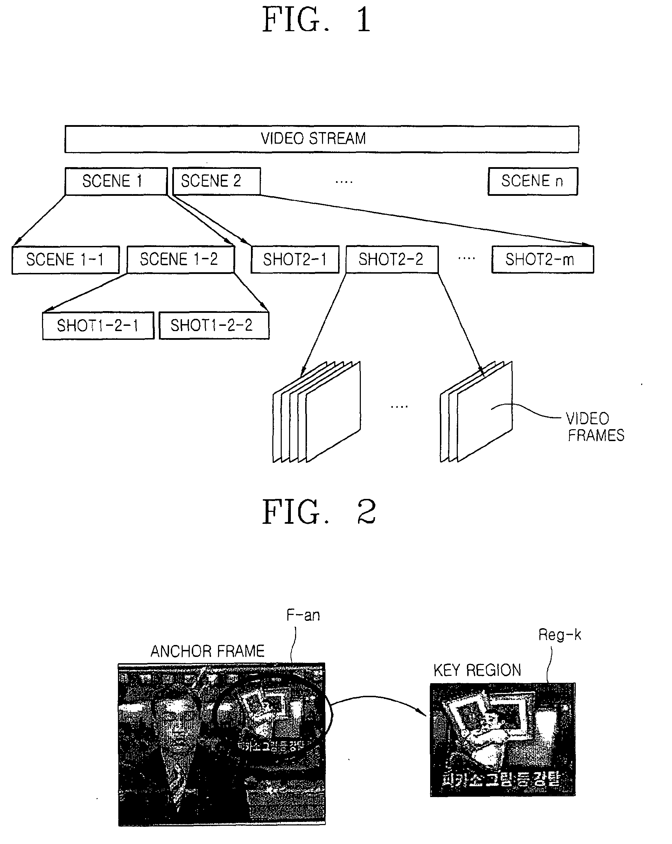

FIG. 1 shows structural information of a general video stream. Referring to FIG. 1, a video stream is consist of a series of scene that is a logical story unit regardless of video genre, each scene is composed of a plurality of sub-scenes or shots, and each shot is composed of sequence of frames.

Most video indexing systems extract shots from the video stream and detect scenes based on the extracted shots, thereby indexing structural information of the video stream That is, the video indexing system extracts a key frame (a video frame extracted from the video stream in order to represent a unit segment well) or key region, and index data for summarizing/searching/orowsing video contents

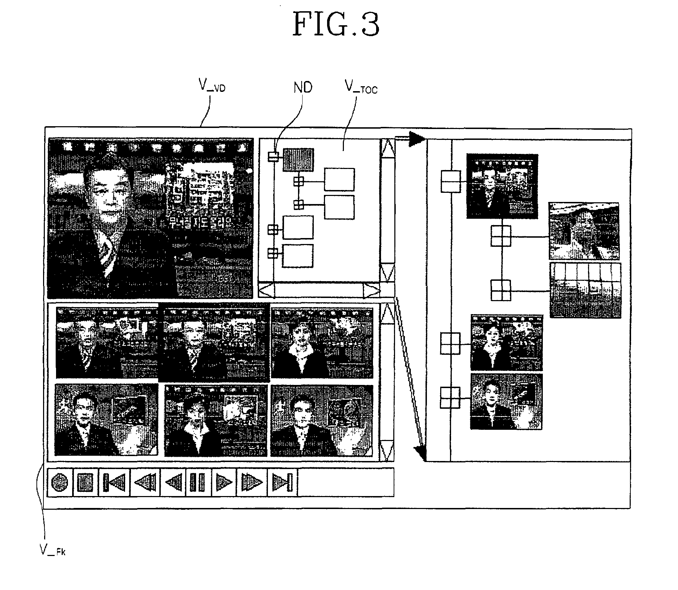

FIG. 2 shows the relationship between an anchor frame and a key region in a news content according to a prior art. A news icon in the anchor frame F-an consisting of a image or characters for summarizing a news segment represents contents of anchor shot or corresponding news article. When it is selected as a key region Reg-k, it is a component representing the corresponding segment That is, the key region Reg-k means a region which is capable of concisely representing contents of a particular segment such as text, human face, news icon,

FIG. 3 shows a conventional non-linear video browsing interface which includes a video reproduction view V-VD, a key frame view V-Fk displaying one-dimensionally key frames representing each shot or each scene, and a tree-shaped table of content (TOC) view V-TOC for directly providing structural information of a video stream to users. Here, each of nodes (ND) of the tree-shaped TOC is a shot and scene representing contents included lower trees and it means a key frame. Accordingly, the interface allows a user to be able to easily move to a desired part of a video or to select and browse a desired part in the video stream without watching the whole content.

However, the above-described conventional video browsing system that represents partial sequences by the key frames or key regions to index/summarize/browse the video has the following problems.
1) The conventional system cannot display relatively lots of information on a screen having a fixed size The conventional key frames and key regions using in the non-linear video browsing system and in the universal multimedia access applications (UMA) are used as means for transmitting the summarized content of a video stream to users through images. However, the users cannot grasp the whole contents of the video stream through the key frames or key regions in small numbers, displayed on the screen having a fixed size. One shot includes video frames displayed for several to tens seconds and a scene is configured of shots although it depends on the genres or characteristics of programs included in the video. In case of a shot that is long or severely variable, thus, one key frame is not appropriate for representing this shot. Accordingly, multiple key frames should be set for one shot or scene.
   Furthermore, in case where relatively large numbers of key frames are provided to a TV or potable terminal that cannot display a lot of key frames on a screen with a fixed size at a time in order to represent the whole contents of shot and/or scene, the user should operate his/her input device many times because he/she has to browse the lots of key frames. The number of the key frames may be reduced to solve this problem. In this case, however, key frames in small numbers cannot represent the content of the video stream, as described above. Accordingly, there is required an efficient user interface capable of displaying lots of information on a screen with a fixed size
2) It is difficult that the content of a scene including shots or sub-scenes is selected as one key frame. That is, generally, it is difficult to select a key frame concisely representing contents of a scene.

Accordingly, there is needed a new method of summarizing a video stream having a hierarchical structure to allow key frames of upper structures to satisfactorily reflect contents included in lower structures.

### SUMMARY OF THE INVENTION

It would therefore be desirable to provide a method of generating a synthetic key frame, which is capable of representing lots of information on a screen with a fixed size.

It would also be desirable to provide a method of describing a synthetic key frame logically or physically formed by combining key frames or key regions.

It would also be desirable to provide a method of summarizing a video hierarchically using a synthetic key frame.

It would also be desirable to provide a video browsing interface using a synthetic key frame.

It would also be desirable to provide a non-linear video browsing method using a synthetic key frame.

It would also be desirable to provide a data managing method using a synthetic key frame.

The invention provides a method of generating a synthetic key frame, comprising the steps of: receiving a video stream from a first source and dividing it into meaningful sections; selecting key frame(s) or key region(s) representative of a divided section; and combining the selected key frame(s) or key region(s), to generate one synthetic key frame

The invention also provides a metnod of describing synthetic key frame data, comprising the steps of: dividing a video stream into meaningful sections, and synthesizing a key frame or key region representing the content of each section into one image to generate a synthetic key frame; and describing a list of key frame/key region included in constituent elements of the synthetic key frame.

The invention also provides a method of describing synthetic key frame data, comprising the steps of dividing a video stream into meaningful sections, and synthesizing a key frame or key region representing the content of each section into one image to generate a synthetic key frame; and generating a combination of key frames or key regions, or key frame and key region included in constituent elements of the synthetic key frame, and physically storing the combination to describe the synthetic key frame

The invention also provides a hierarchical video summarizing method using a synthetic key frame, comprising the steps of: dividing a video stream into meaningful sections, and synthesizing a key frame or key region representing the content of each section into one image to generate a synthetic key frame, and assigning the synthetic key frame to a key image locator, a hierarchical summary list for describing lower summary structures, and structural information of the video stream

The invention also provides a method for providing a video browsing interface, comprising the steps of dividing a video stream into meaningful sections, and synthesizing a key frame or key region representing the content of each section into one image to generate a synthetic key frame; and providing a user interface to a predetermined display to browse a video related with the generated synthetic key frames.

The invention also provides a non-linear video browsing method, comprising the steps of: dividing a video stream into meaningful sections, and synthesizing a key frame or key region representing the content of each section into one image, to generate a synthetic key frame; providing a user interface to a predetermined display to browse a video related with the generated synthetic key frames; selecting the synthetic key frame according to an input by a user; and reproducing a segment represented by the selected synthetic key frame. The invention also provides apparatus, computer program products, interfaces and data structures corresponding to the above methods.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawing, in which like reference symbols indicate the same or the similar components, wherein:
FIG. 1 shows structural information of a general video stream;
FIG 2 shows the relationship between an anchor frame and a news icon in a prior art;
FIG. 3 shows a conventional non-linear video browsing interface;
FIGS. 4A and 4B are diagrams for explaining the concept of a synthetic key frame according to the present invention;
FIG 5A shows the description structure of a segment locator according to the present invention,
FIG 5B shows the description structure of an image locator according to the present invention;
FIG 6 shows the description structure of a key frame locator according to the present invention;
FIG 7 shows the description structure of a key region locator according to the present invention;
FIG 8 shows the description structure of synthetic key frame information according to the present invention;
FIG. 9 shows the description structure of a layout with respect to the arrangement of constituent elements of a synthetic key frame according to the present invention,
FIG. 10 shows the structure of a news video according to the present invention;
FIG 11 shows a synthetic key frame of news headlines according to the present invention,
FIGS 12A and 128 show synthetic key frames of detailed news sections according to the present invention;
FIGS. 13A and 13B show synthetic key frames generated from a soccer game video according to the present invention;
FIG 14 shows structural information of a video and hierarchical synthetic key frames according to the present invention;
FIG. 15 shows the description structure of a hierarchical image summary element for hierarchical video stream summary according to the present invention;
FIG. 16 shows a video browsing interface using a synthetic key frame according to the present invention;
FIG. 17 shows an example of application of the synthetic key frame according to the present invention to UMA; and
FIG. 18 is an example of a flow diagram showing a method of communicating information using the synthetic key frame according to the present invention, applied to UMA.

### DETAILED DESCRIPTION OF THE PREFERRED EMBODIMENT

Reference will now be made in detail to the preferred embodiments of the present invention, examples of which are illustrated in the accompanying drawings.

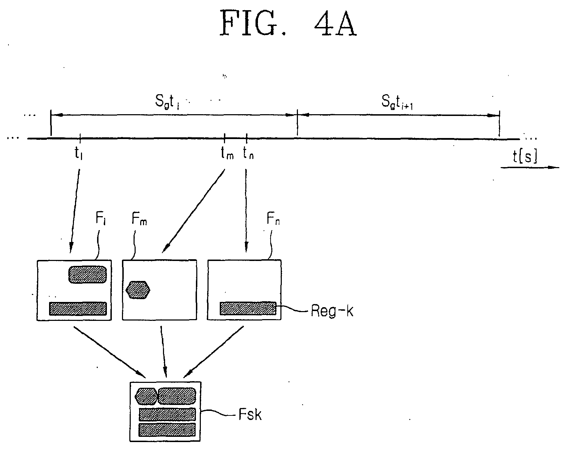

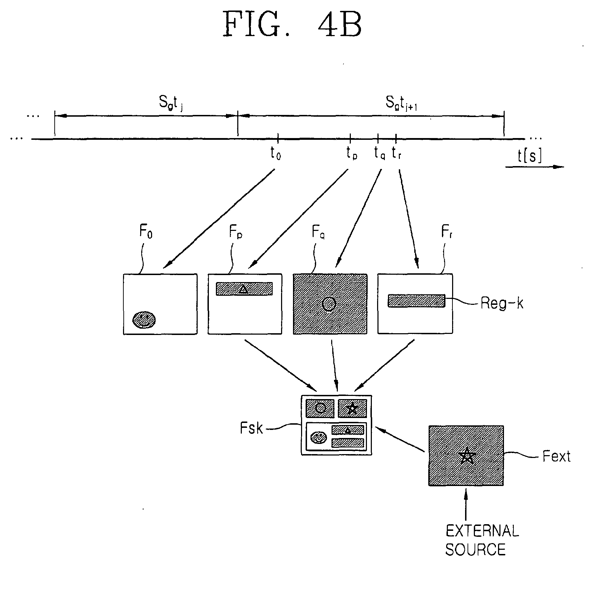

FIGS. 4A and 48 are diagrams for explaining the concept of a synthetic key frame according to the present invention. Referring to FIG 4A, the synthetic key frame according to the invention is generated by combining key frames or key regions Reg-k from frames Fl, Fm, Fn which are extracted at predetermined points of time tl, tm, tn within one segment Sgti when a video stream is divided into predetermined numbers of segments Sgt1, Sgt2,...., Sgti, Sgti+1. Referring to FIG 4B, the synthetic key frame of the invention is generated by combining key frames or key regions Reg-k from frames Fo, Fp, Fq, Fr extracted at predetermined points of time to, tp, tq, tr within one segment Sgtj+1 and external frames Fext supplied from an external source when a video stream is divided into predetermined numbers of segments Sgt1, Sgt2, .. Sgtj, Sgtj+1.

The synthetic key frame of the invention, different from the key frame in the prior art, is not a frame which has been physically generated in the video stream because it is created by combining regions having meaningful information or key frames in order to represent a specific segment in the video stream

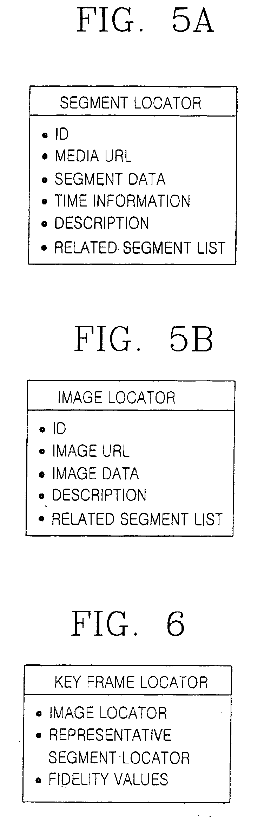

FIGS. 5A and 5B respectively show description structures of a segment locator and an image locator according to the present invention. Referring to FIG 5A, the segment locator as a means for designating a segment in a video stream, inlcudes segment ID, Media URL or actual segment data for desiganting the audiovisual segment and segment time information such as segment starting/ending time or length, description information for annotation for the segment, and a related segment list.

Here, the related segment list is used for representing description of abstract/detail, cause/result relation among segments, and components of the list include variables such as the segment locator or an identifier for referring to the segment locator.

Referring to FIG. 5B, the image locator as a means for designating an image includes inherent ID, image URL, or image data for designating the image. The image locator can havea structure which is capable of describing information such as an image related segment list and annotation.

FIG 6 shows the description structure of a key frame locator according to the present invention. As shown in FIG. 6, the key frame locator includes an image locator, additionally, a representative segment locator for indicating which segment is represented by corresponding key frame, and fidelity values for indicating how faithfully corresponding segment is represented.

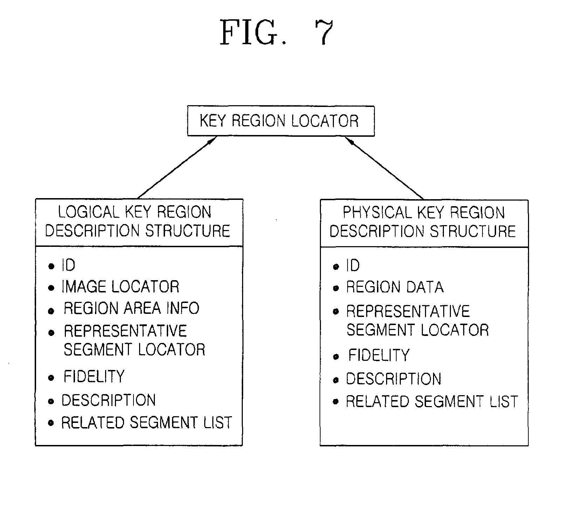

FIG 7 shows the description structure of a key region locator according to the present invention, which is a logical or physical key region description structure.

The logical key region description structure includes an ID, an image locator, and region area information corresponding to a key region of an image designated by the image locator. It additionally includes a representative segment locator for indicating which segment is represented by the corresponding key region, fidelity values for indicating how faithfully the key region represents corresponding segment, description information for other annotations and a related segment list for designating segment related with the key region. This logical key region description structure describes the key region using metadata.

The physical key region description structure includes an inherent ID, region data, a representative segment locator for indicating which segment is represented by corresponding key region if required, fidelity, description and a related segment list. For the video browsing interface using the synthetic key frame according to the present invention, the synthetic key frame must have been physically generated or be logically described in a content-based data region with respect to a video stream.

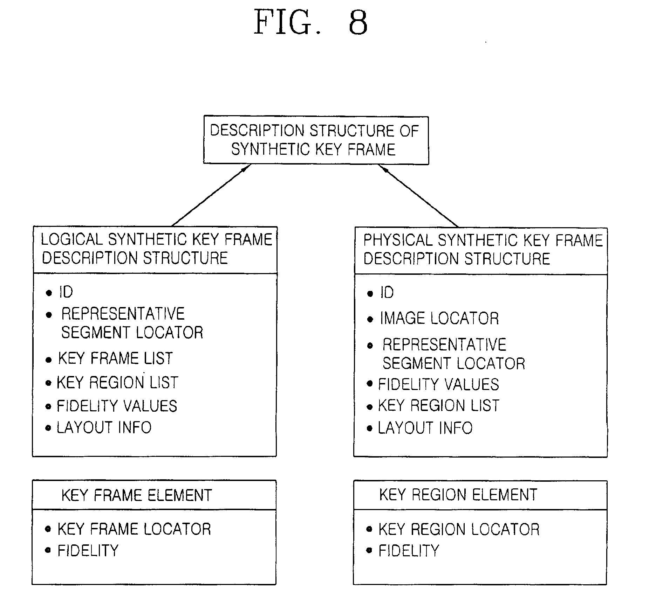

FIG 8 shows the description structure of synthetic key frame information according to the present invention, which has a logical description structure and a physical description structure.

As shown in FIG. 8, the logical synthetic key frame description structure includes variables such as an ID, a representative segment locator for designating a segment represented by the synthetic key frame, a key frame list and a key region list that are constituent elements of the synthetic key frame, fidelity for indicating how faithfully the synthetic key frame represents the segment, and layout information for indicating the arrangement state of constituent elements of the synthetic key frame

The physical synthetic key frame description structure includes variables such as an ID, an image locator for designating the actual synthetic key frame, a representative segment locator for designating a segment represented by the synthetic key frame, fidelity for indicating how faithfully the synthetic key frame represents the segment, a key region list related with the synthetic key frame, and layout information for indicating the arrangement state of constituent elements of the synthetic key frame.

Here, key frame elements constructing the key frame list include a key frame locator for designating a corresponding key frame and fidelity for indicating how important meaningful information the corresponding key frame represents in the syntnetic key frame structure, as shown in FIG. 8. Furthermore, key region elements constructing the key region list include a key region locator for designating a corresponding key region and fidelity information for indicating how important meaningful information the corresponding key region represents in the synthetic key frame structure. The fidelity can be extracted automatically or manually. The fidelity automatically extracted is obtained with regard to information like duration of the key region, the size of an object, audio, etc. and a matching level of these information items

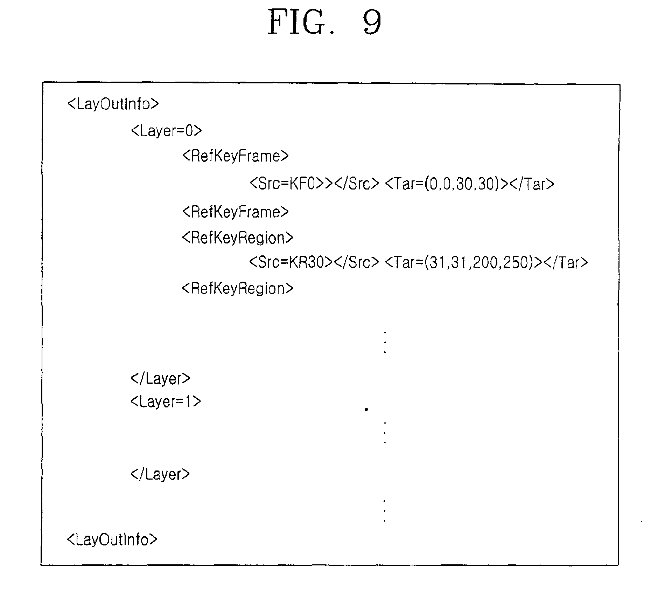

FIG 9 shows the description structure of layout information with respect to the arrangement of constituent elements of the synthetic key frame according to the present invention. This description structure is represented by a markup language such as HTML and XML. Because the constituent elements of the synthetic key frame may be arranged, being overlapped, the layout description structure includes layer information about the first layer (layer=0), the second layer (layer=1) and so on, and information about a location where the key frame or key region contained in each layer is displayed or to be displayed on a screen.

There will be explained an example of application of the synthetic key frame structure and synthetic key frame generating method according to the invention to a broadcasting program.

### A) Synthetic key frame generated from a news video

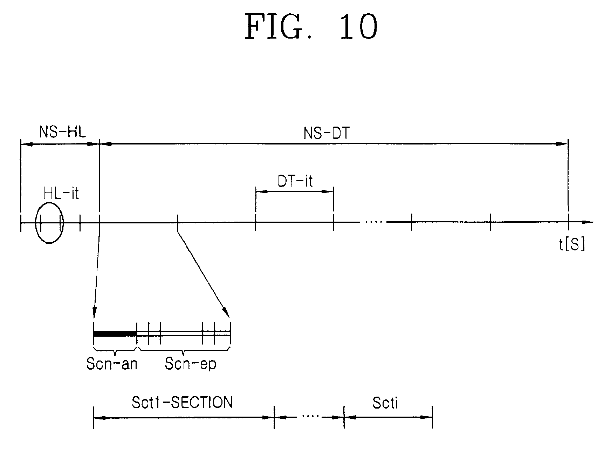

FIG. 10 shows the structure of the news video according to the present invention. The news video is generally configured of a headline news section NS-HL, a detailed news section NS-DT, a summary news section and a weather/sports section A commercial advertisement section may be added thereto Each of these sections further includes sub-sections. The section corresponds to a scene in the video stream structure For example, the headline news section NS-HL may be divided into headline items HL-it and the detailed news section NS-DT may be classified into news items DT-it. Here, the items can be formed of key frames. Each news item DT-it is basically divided into an anchor scene Scn-an and an episode scene Scn-ep

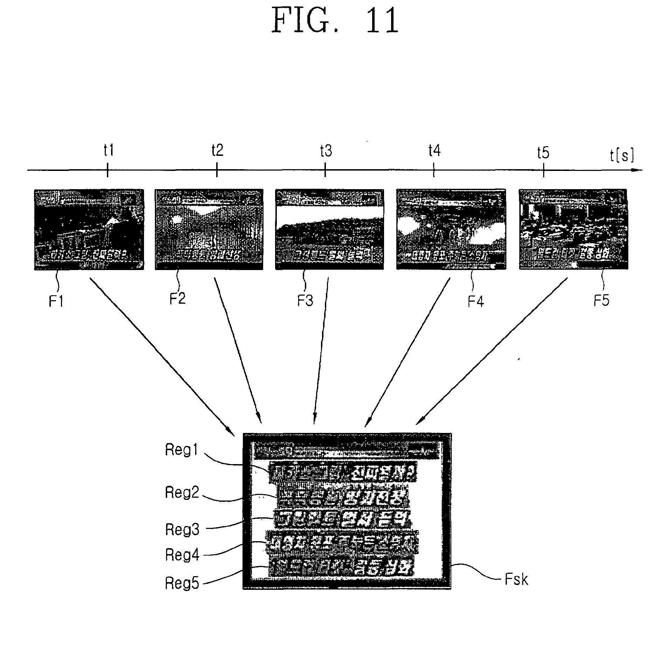

FIG. 11 shows an example of a process of generating the synthetic key frame of headline news section NS-HL according to the present invention.

The headline news section NS-HL is constructed of five headline items HL-it These headline items are configured of twenty-three shots and the running time is 59 seconds, approximately. The five headline items are summarized using key frames F1, F2, F3, F4 and F5 extracted at points of time t1, t2, t3, t4 and t5, respectively Accordingly, one synthetic key frame Fsk according to the present invention is created in a manner that key regions Reg1, Reg2, Reg3, Reg4 and Reg5, configured of texts, are extracted from the key frames F1, F2, F3, F4 and F5 to be combined. The synthetic key frame can display the whole contents of the headline news section NS-HL on a screen with a fixed size at a time.

On the contrary, the conventional video indexing system should select several key frames representing the headline news section, for example, because it assigns at least one key frame to an individual shot or scene. Furthermore, it cannot display an entire contents of headline section on a screen at a time.

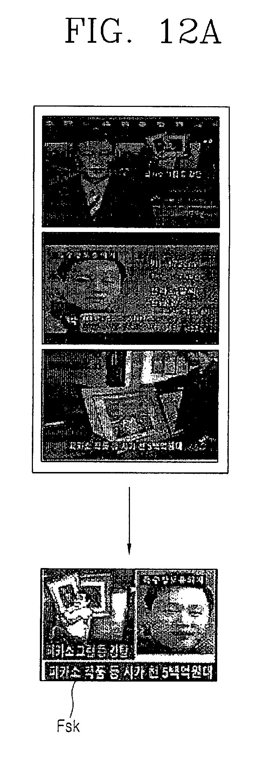

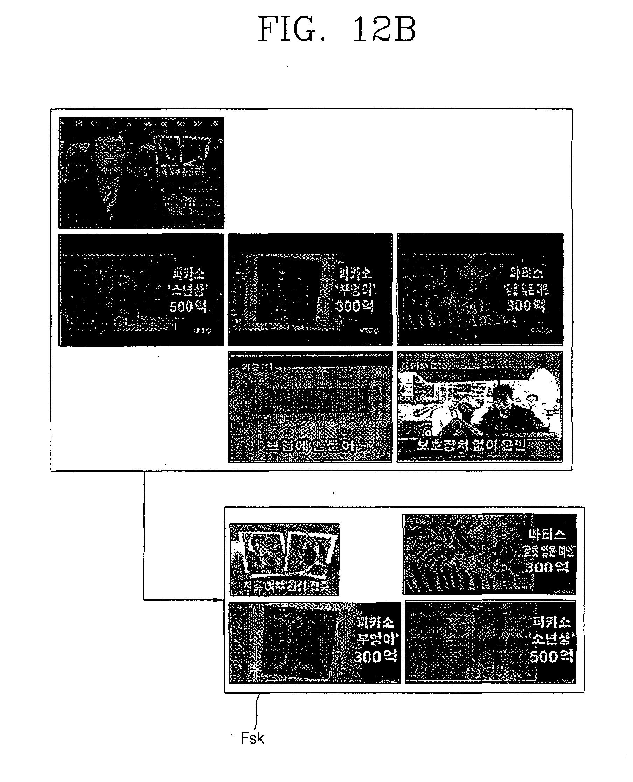

Figs 12A and 12B show synthetic key frames of detailed news sections according to the present invention. FIG. 12A illustrates a synthetic key frame Fsk formed from one news item NS-it that is constructed of twenty-one shots and fifty-seven seconds long, and FIG. 12B illustrates a synthetic key frame Fsk extracted from one news item NS-it that is constructed of twenty-one shots and one-hundred-seven seconds long. That is, the synthetic key frames corresponding to news items of a news program can be differently formed. Where the synthetic key frames are arranged or allocated to corresponding nodes in the TOC interface, the contents of lower structures of the TOC interface can oe displayed at a time. On the contrary, the conventional video indexing system should extract lots of key frames for a single news item and it cannot display these key frames on a screen at the same time

### B) Synthetic key frame generated from a sports video

Other than news, it is necessary to summarize streams base on segment-based summary in sports news. For example, soccer video is configured of great numbers of video frames so that the running time is long To summarize the soccer video accordingly, one shot should be represented by lots of key frames and one key frame is difficult to represent a scene constructed of shots

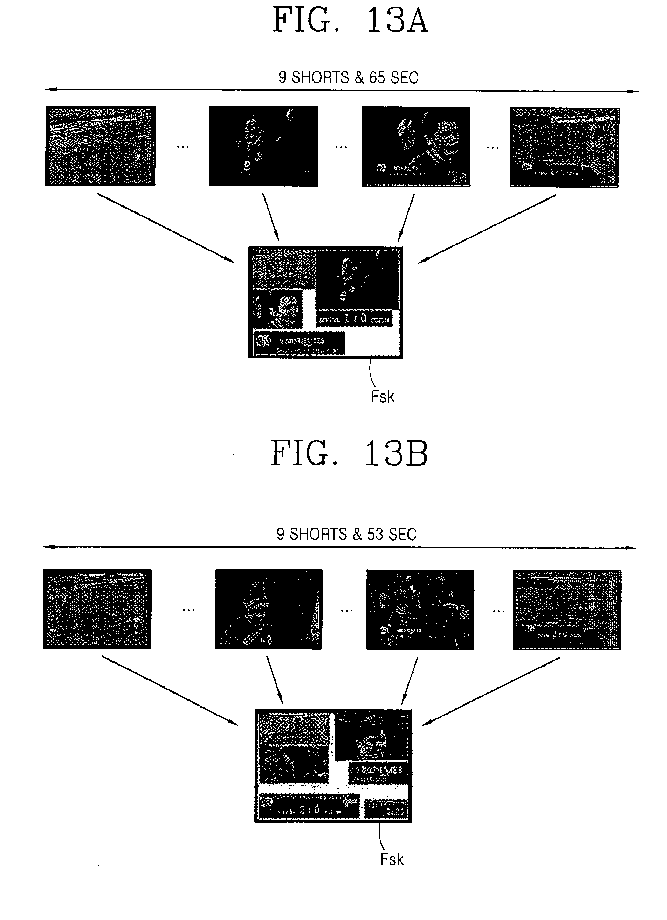

FIGS. 13A and 13B show synthetic key frames generated from the soccer game video according to the present invention.

FIG. 13A illustrates a synthetic key frame Fsk generated from one scene constructed of nine shots whose running time is sixty-five seconds, and FIG. 13B illustrates a synthetic key frame Fsk generated from one scene constructed of nine shots whose running time is fifty-three seconds.

Though the shots included in one scene have different contents, the synthetic key frame Fsk according to the present invention can present an image combining key frames or key regions representing the entire contents of the scene without selecting a key frame representing a scene. Therefore, the synthetic key frame Fsk can summarize the entire contents of the scene.

The synthetic key frame of the present invention can be generated using the key frame or key region for entertainment, documentary, talk show, education, advertisement and home shopping programs as well as the news and sports video described above with reference to FIGS. 11, 12A, 12B, 13A and 13B.

Meantime, if arrangement information of constituent elements of the synthetic key frame, such as key regions or key frames, is described in the description, a user is able to not only browse corresponding video using the synthetic key frame but also perform non-linear video browsing using the constituent elements. Since the synthetic key frame shown in FIG. 11, for example, is generated by combining the key regions Reg1, Reg2, Reg3, Reg4 and Reg5 of the key frames extracted from the headline news section, the user selects a key region (Reg1, for instance) of the synthetic key frame so that he/she can browse a headline news item or detailed news item corresponding to the selected key region

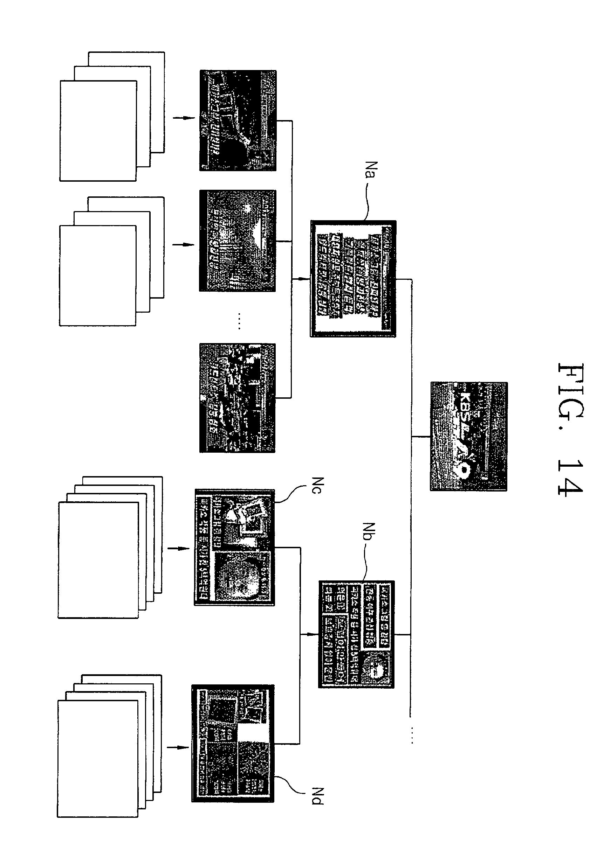

FIG. 14 shows structural information of a video stream and a synthetic key frame that hierarchically summarizes the structural information in accordance with the present invention. In FIG 14 nodes correspond to frames representative of a program, shot and scene Nodes Na, Nb, Nc and Nd that are synthetic key frames that represent contents of lower level. To summarize lower structures, key regions or key frames of the lower level can be used for the synthetic key frames of upper structures. Accordingly, the user can search/browse a video stream using a hierarchical structure of video at a desired level and the synthetic key frames. If one key frame or key region is slected for nodes Na, Nb, Nc and Nd, a user can not fully understand the lower structure and content without browsing the lower level. But with synthetic key frame, user can easily understand the structure and content of the lower level without esxplicit browsing of the lower level.

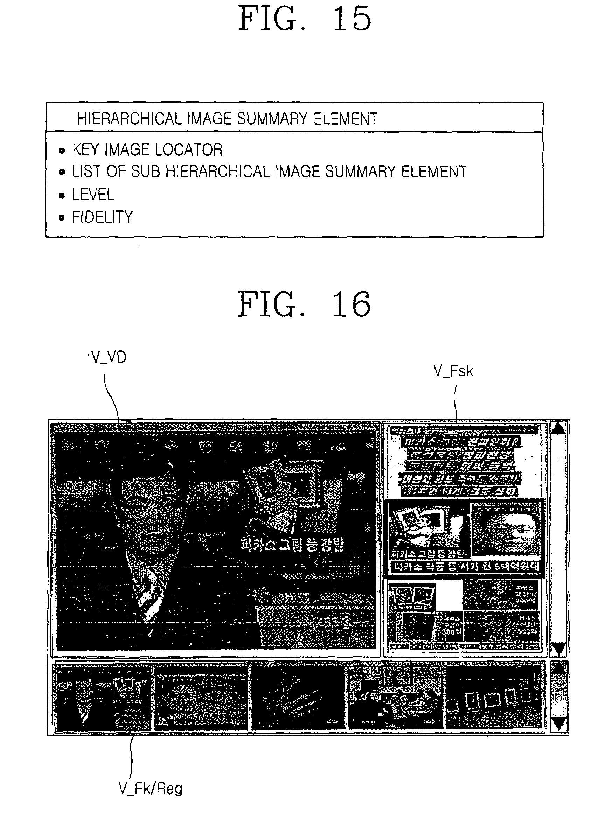

Hierarchical image summary elements must be defined in order to summarize the video stream with the hierarchical structure. FIG. 15 shows the description structure of the hierarchical image summary element for hierarchical video stream summary according to the present invention. The description structure of the hierarchical image summary element, which is a recursive structure, includes variables such as a key image locator, a list of sub-hierarchical image summary elements, summary level information and fidelity indicating how faithfully corresponding synthetic key frame represents the lower structures Here, the key image locator is a data structure capable of designating a key frame, key region and synthetic key frame, and the list of sub-hierarchical image summary elements describes a lower summary structure, each element of the list being a hierarchical image summary element For example, when the number of the elements of the list of sub-hierarchical image summary elements is '0', it corresponds to the lowest node(leaf node) and means there does not exist a lower summary element any more

FIG. 16 shows a non-linear video browsing interface example using the synthetic key frame according to the present invention The video browsing interface includes a video display view V-VD, a key frame/key region view V-Fk/Reg, and a synthetic key frame view V-Fsk. The video display view V-VD and the key frame/key region view V-Fk/Reg are the same functions as those of the general non-linear video browsing interface shown in FIG. 3. The synthetic key frame view V-Fsk displays a video summary on a screen using the synthetic key frame such that the user can select the synthetic key frame or the key frame or key region included in the synthetic key frame to easily move to the section corresponding to the key frame or key region. The synthetic key frame view V-Fsk may be displayed one-dimensionally, as shown in FIG. 16, or displayed in a TOC-shaped tree structure.

Meanwhile, the synthetic key frame according to the present invention can be applied to UMA application. Here, the UMA is an apparatus having improved information transmission performance, which can process any of multimedia information into a form most suitable for a user environment, being adapted to a variety of variations in the user environment, to allow a user to be able to conveniently use the information. Specifically, the user can obtain only limited information based on his/her terminal or a network environment connecting the terminal to a server. For instance, the device the user uses may not support motion pictures but still images, or it may not support video but audio. In addition, on the basis of network connection method/medium, there is a limit in the amount of data capable of being transmitted to the user's device within a predetermined period of time because of insufficiency in the transmission capacity of data delivered through the network The UMA converts and transmits a video stream to a user who cannot receive and display the video stream due to restriction conditions of the device/network, using reduced numbers of key frames with a decreased size within the user environment. By doing so, the UMA can help the user to understand contents included in the video stream.

By being applied to the UMA, the synthetic key frame of the invention can be used as a means for providing a lot of meaningful information while reducing the number of the key frames to be transmitted to decrease the amount of data to be delivered.

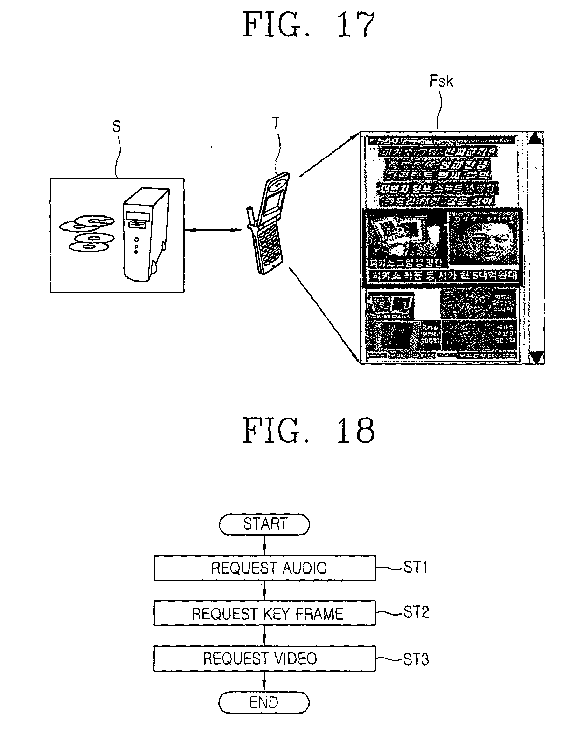

FIG. 17 shows an example of application of the synthetic key frame according to the present invention to the UMA. This application includes a server S generating the synthetic key frame according to the present invention, and a terminal T for receiving the synthetic key frame from the server S and transmitting a predetermined request signal to the server. As described above, the synthetic key frame Fsk consists of texts, key regions and key frames.

FIG 18 is a flow diagram showing a method of receiving information using the synthetic key frame according to the present invention, which is applied to UMA Referring to FIG. 18, when the synthetic key frame Fsk is sent from the server S to the user's terminal T, the user selects the synthetic key frame or a component thereof, corresponding to a part he/she wants to browse, and then requests the server to deliver audio of corresponding part (ST1). When the server S sends the audio to the user, the user receives the audio and, when it is not the information he/she wants, does not browse the contents included in the synthetic key frame any more. However, if he/she wants to more information, he/she requests more key frames with respect to corresponding section (ST2). By doing so, the user can browse the contents of the synthetic key frame more and he/she can also request the video to browse video streams (ST3).

In case where the synthetic key frame is applied to the UMA, the user can select a desired part and easily browse it so that he can save communication cost. Furthermore, the server can easily transmit information about the contents of multimedia stream to even a device with a limited function.

As described above, the synthetic key frame of the present invention is generated by combining key frames or key regions to represent a specific section or segment of a video stream, thereby displaying lots of information on limited device. Moreover, the synthetic key frame can summarize a video stream one-dimensionally or hierarchically and it can be used as a means for non-linear video browsing. In addition, the synthetic key frame of the invention can be effectively applied to UMA with a limited performance of a terminal or transmitting device, and it can be also applied to all of the video genres. The video summarizing method using the synthetic key frame of the invention can efficiently summarize the content of a video because it can sufficiently display the content of shots or scenes on a screen with a fixed size using the synthetic key frame

Although specific embodiments including the preferred embodiment have been illustrated and described, it will be obvious to those skilled in the art that various modifications may be made without departing from the scope of the present invention.

## Claims

1. A method of generating a synthetic key frame, comprising the steps of:
receiving a video stream from a first source and dividing it into meaningful sections;
selecting key frame(s) or key region(s) representative of a divided section; and
combining the selected key frame(s) or key region(s), to generate one synthetic key frame

2. The method of generating a synthetic key frame as claimed in claim wherein the dividing step further comprises the step of receiving a video stream from a second source and dividing it into meaningful sections.

3. The method of generating a synthetic key frame as claimed in claim 1, wherein the selecting step further comprises the step of selecting key frame(s) or key region(s) output from the second source.

4. The method of generating a synthetic key frame as claimed in claim 1, wherein the section is a unit of segment.

5. A method of describing synthetic key frame data, comprising the steps of.
dividing a video stream into meaningful sections, and synthesizing a key frame or key region representing the content of each section into one image, to generate a synthetic key frame; and
describing a list of key frame and/or key region included in constituent elements of the synthetic key frame.

6. A method of describing synthetic key frame data as claimed in claim 5, wherein the describing step includes:
an ID for identifying the synthetic key frame;
a representative segment locator which describe the temporal information of the segment that the synthetic key frame represent; and
key frame list or key region list for identifying the elements of the synthetic key frame;
wherein the describing step can additionally include
a fidelity value indicating how faithfully the synthetic key frame represent the segment, and
information on the arrangement of each constituent element when the key frame or key region is displayed as the constituent element of the synthetic key frame.

7. A method of describing synthetic key frame data as claimed in claim 6, wherein the information about the arrangement includes two-dimensional location information of the constituent element or layer information as three-dimensional location information of the constituent element.

8. A method of describing synthetic key frame data as claimed in claim 5, wherein, when the synthetic key frame includes the key frame list, each element of the key frame list has a key frame locator as a key frame description unit structure and, when the synthetic key frame includes the key region list, each element of the key region list has a key region locator as a key region description unit structure

9. A method of describing synthetic key frame data as claimed in claim 8, wherein the key frame locator includes an image locator capable of containing the location, annotation and a related segment with respect to a stored image, as data for designating the key frame, a segment locator for indicating information including a segment locator that designates a segment represented by corresponding key frame, and additionally a fidelity value indicating how faithfully the key frame represents the segment.

10. A method of describing synthetic key frame data as claimed in claim 8, wherein the key region locator, serving as a data structure for describing the key region, is information logically/physically designating stored location or segment data, wherein the key region locator includes an inherent ID for identifying the key region;
an image locator and region area info to locate the region or region data to locate the region, and
a representative segment locator;
wherein the key region locator can additionally include a fidelity value indicating how faithfully the key region represents the segment;
an annotation, and
a list of related segment with the key region.

11. A method of describing synthetic key frame data as claimed in claim 5, wherein, when the synthetic key frame includes the key frame list, each component of the key frame list has fidelity indicating how faithfully corresponding key frame represents the meaningful content in the synthetic key frame, as a key frame description unit structure, and, when the synthetic key frame includes the key region list, each component of the key region list has a fidelity value indicating how faithfully corresponding key region represents the meaningful content in the synthetic key frame, as a key region description unit structure.

12. A method of describing synthetic key frame data, comprising the steps of
dividing a video stream into meaningful sections, and synthesizing a key frame or key region representing the content of each section into one image, to generate a synthetic key frame, and
generating a combination of key frames or key regions, or key frame and key region included in constituent elements of the synthetic key frame, and physically storing the combination to describe the synthetic key frame.

13. A method of describing synthetic key frame data as claimed in claim 12, wherein the synthetic key frame description includes.
an ID for identifying the synthetic key frame;
an image locator for designating the stored synthetic key frame file,
an ID for identifying the synthetic key frame;
an representative segment locator which describe the temporal information of the segment that the synthetic key frame represent; and
key region list for identifying the elements of the synthetic key frame; wherein the description can additionally include
a fidelity value indicating how faithfully the synthetic key frame includes section information about a segment represented by the synthetic key frame
and information on the arrangement of the key frame and key region that are the constituent elements of the synthetic key frame.

14. A method of describing synthetic key frame data as claimed in claim 12, wherein each element of the key region list of the synthetic key frame constituent elements has a key frame locator or a key region locator.

15. A method of describing synthetic key frame data as claimed in claim 14, wherein the key region locator, serving as a data structure for describing the key region, is information logically/physically designating stored location or segment data, the key region locator includes:
an inherent ID for identifying the key region, an image locator and region area info to locate the region or region data to locate the region; and
a representative segment locator;
wherein the key region locator can additionally include
a fidelity value indicating how faithfully the key region represents the segment;
an annotation; and
a list of related segment with the key region

16. A method of describing synthetic key frame data as claimed in claim 13, wherein each element of the key region list includes a fidelity value indicating how faithfully corresponding key region represents the meaningful content in the synthetic key frame, as a key region description unit structure.

17. A method of describing synthetic key frame data as claimed in claim 13, wherein the information about the arrangement includes two-dimensional location information of the constituent elements or layer information that is three-dimensional location information of the constituent elements

18. A hierarchical video summarizing method using a synthetic key frame, comprising the steps of:
dividing a video stream into meaningful sections, and synthesizing a key frame or key region representing the content of each section into one image, to generate a synthetic key frame; and
assigning the synthetic key frame to a key image locator, a hierarchical summary list for describing lower summary structures, and structural information of the video stream.

19. The hierarchical video summarizing method using a synthetic key frame as claimed in claim 18, wherein the key image locator is a data structure for designating an image using a key region locator, a key frame locator and a synthetic key frame locator.

20. The hierarchical video summarizing method using a synthetic key frame as claimed in claim 18, wherein each hierarchical summary structure is represented by an image representative of a specific segment

21. The hierarchical video summarizing method using a synthetic key frame as claimed in claim 18, wherein each component of the lower hierarchical summary list uses a hierarchical/recursive summary structure as a lower hierarchical summary structure.

22. The hierarchical video summarizing method using a synthetic key frame as claimed in claim 18, wherein the hierarchical summary structure has summary level information.

23. The hierarchical video summarizing method using a synthetic key frame as claimed in claim 18, wherein the hierarchical summary structure includes a fidelity value indicating how faithfully a part, represented by the lower hierarchical summary list, is expressed.

24. A method for providing a video browsing interface, comprising :
dividing a video stream into meaningful sections, and synthesizing a key frame or key region representing the content of each section into one image, to generate a synthetic key frame; and
providing a user interface to a predetermined display to browse a video related with the generated synthetic key frame.

25. The method for providing a video browsing interface as claimed in claim 24, wherein the user interface provides the synthetic key frame in the form of view.

26. The method for providing a video browsing interface as claimed in claim 24, wherein the synthetic key frame is arranged in a time sequence, and the synthetic key frame is arranged in a tree shape.

27. The method for providing a video browsing interface as claimed in claim 24, wherein the synthetic key frame is assigned to each node in TOC form

28. A non-linear video browsing method, comprising the steps of
dividing a video stream into meaningful sections, and synthesizing a key frame or key region representing the content of each section into one image, to generate a synthetic key frame;
providing a user interface to a predetermined display to browse a video related with the generated synthetic key frame;
selecting the synthetic key frame according to an input by a user; and
reproducing a segment represented by the selected synthetic key frame

29. The non-linear video browsing method as claimed in claim 28, wherein the reproducing step reproduces a segment related with constituent elements (key region or key frame) of the contents of the key frame or the key frame selected by the user's input.

30. Apparatus comprising means adapted to carry out the method steps of any preceding claim.

31. Video browsing apparatus comprising means adapted to carry out the method steps of any of claims 1 to 29.

32. A video browsing interface provided by carrying out the method steps of any of claims 1 to 29.

33. A computer program product comprising computer program elements adapted to carry out the method steps of any of claims 1 to 29.
